# EUROPÄISCHE PATENTSCHRIFT

(11) **EP 0 366 989 B1**
(45) Veröffentlichungstag und Bekanntmachung des Hinweises auf die Patenterteilung: **15.02.1995**
(21) Anmeldenummer: 89118952.4
(22) Anmeldetag: 12.10.1989
(51) Int. Cl.: F16C 3/00, F16C 7/00

(54) **Verbundhohlkörper**
Hollow composite member
Corps creux composé

(30) Priorität: 03.11.1988 DE 3837293
(43) Veröffentlichungstag der Anmeldung: 09.05.1990
(60) Teilanmeldung: 94110337.6
(73) Patentinhaber: Emitec Gesellschaft für Emissionstechnologie mbH, 53797 Lohmar (DE)
(72) Erfinder: Swars, Helmut, D-5060 Bergisch Gladbach 1 (DE)
(74) Vertreter: Manderla, Thomas, Dr.

(56) Entgegenhaltungen:
- EP-A- 0 212 130
- DE-A- 3 128 744
- FR-A- 2 536 131
- GB-A- 1 162 022
- US-A- 2 306 960
- PATENT ABSTRACTS OF JAPAN, Band 7, Nr. 157 (M-227)[1302], 9. Juli 1983;& JP-A-58 65 524 (KAWASAKI) 19-04-1983

## Beschreibung

Die Erfindung betrifft einen Verbundhohlkörper zur Aufnahme von Drehmomenten und/oder Zug-, Druck- oder Biegekräften.

Verbundhohlkörper sind beispielsweise aus der EP-A-0 212 130 bekannt, bei der ein Armierungszylinder auf ein Rohrstück so aufgebracht wird, daß im Rohrstück eine Druckvorspannung und im Amierungszylinder eine Zugvorspannung bestehen bleibt. Der Amierungszylinder besteht hierbei vorzugsweise aus einem Faserverbundwerkstoff und das Ineinanderschieben der beiden Teile wird durch elastische Verformung im Sinne eines Aufweitens des Amierungskörpers und eines radialen Zusammendrückens des Rohrkörpers ermöglicht, wobei beim Ausgleich die kraftschlüssige Verbindung zustandekommt.

Der vorliegenden Erfindung liegt die Aufgabe zugrunde, verschiedene Elemente in Form von Verbundhohlkörpern bereitzustellen, die sich bei leichter Bauweise durch hohe Festigkeit auszeichnen und dabei leicht herstellbar sind.

Die Lösung dafür besteht darin, daß in einer äußeren Materialschicht durch in radialer Richtung druckaufnehmende innere Stützmittel im wesentlichen über die gesamte axiale Länge eine jeweils über dem Umfang gleichmäßige Zugvorspannung vorherrscht. Entsprechend der Verteilung der Wanddicke und der Größe der örtlichen Druckbeaufschlagung bzw. der zeitlichen Abfolge der Druckbeaufschlagung einzelner axialer Bereiche ist vorgesehen, daß in der äußeren Materialschicht zugleich axial eine gleichmäßige oder ungleichmäßige Druckvorspannung vorherrscht.

Nach einer günstigen Ausführung ist vorgesehen, daß eine an der äußeren Schicht umlaufend anliegende plastisch aufgeweitete innere Schicht aus einem Material geringerer Streckgrenze das Stützmittel bildet. Durch diese Lösung können einfach herstellbare Hohlkörper bereitgestellt werden, die durch die innere Vorspannung eine erhöhte Steifigkeit gegen Biege- und Torsionsbelastung aufweisen, wie es beispielsweise bei Kurbelwellen, Getriebewellen oder Nockenwellen vor Vorteil ist. Durch das erfindungsgemäße Aufeinanderabstimmen der Streckgrenzen der Materialien kann der gewünschte Spannungszustand in an sich bekannter Weise durch innere Druckbeaufschlagung herbeigeführt werden.

Als bevorzugte Werkstoffe für die äußere Schicht kommen Materialien mit hoher Zugfestigkeit und hoher Streckgrenze infrage, beispielsweise Vergütungsstähle, Federstähle, Titan oder Faserverbundwerkstoffe. Als Werkstoffe für die innere Schicht beziehungsweise die Hülsen, die plastisch verformbar sein müssen, sind entsprechend ausgewählte Baustähle, Kohlenstoffstähle oder Nichteisenmetalle vorzuschlagen. Die äußere Schicht und die innere Schicht beziehungsweise die inneren Hülsen können jeweils ihrerseits aus mehreren Lagen mit nach außen zunehmender Festigkeit bestehen.

Die Wandstärken der Verbundschichten bzw. die Festigkeitskennwerte bei aus Einzelabschnitten axial zusammengesetzten Hohlkörpern können in Längsrichtung abgestuft werden, so daß sich mit unterschiedlichem Aufweitdrücken nacheinander wirkend oder mit gleichem Aufweitdruck gleichzeitig wirkend eine unterschiedliche axiale und radiale Vorspannung ergibt, wobei letztere in einzelnen Querschnitten jeweils etwa gleichmäßig ist.

Das plastische Aufweiten der jeweils inneren Schicht oder der jeweils inneren Hülsen ist durch innere Druckaufgabe, die guasistatisch oder pulsierend oder in explosionsartiger Entfaltung erfolgen kann, bevorzugt gegen die Abstützung einer äußeren Form, das heißt eines Gesenkes vorzunehmen. In dieser Form ist dabei ein Aufweitspiel vorzusehen, wobei vor Erreichen der Elastizitätsgrenze die Außenschicht sich an der sehr stabilen Wandung anlegen soll, so daß der Aufweitdruck nicht eng begrenzt werden muß.

In die jeweils innere Schicht oder die inneren Hülsen können zusätzliche Stützmittel in Form von Querböden oder dergleichen eingepreßt oder eingeformt sein, die beispielsweise im Bereich von Querschnittssprüngen für eine erhöhte radiale Steifigkeit sorgen.

Die jeweils in der inneren und äußeren Schicht aufrechterhaltene Vorspannung kann auch durch andere Fügeverfahren, insbesondere thermisches Fügen (Schrumpfen, Wachsen) oder durch reine axiale Preßverbindung erzeugt werden, wobei das Verhältnis der Streckgrenzen der Materialien von innerer und äußerer Schicht in der Bedeutung zurücktritt.

Bevorzugte Ausführungsbeispieie und das Umfeld der Erfindung sind in den Zeichnungen beschrieben.
- Fig. 1a: zeigt einen erfindungsgemäßen Verbundhohlkörper im Querschnitt,
- Fig. 1b: zeigt einen Hohlkörper nach Fig. 1a im Längsschnitt.
- Fig. 2a: zeigt einen anderen Verbundhohlkörper vor dem Aufweiten im Querschnitt,
- Fig. 2b: zeigt einen weiteren Verbundhohlkörper vor dem Aufweiten im Querschnitt,
- Fig. 2c: zeigt einen Hohlkörper nach Fig. 2a nach dem Aufweiten im Querschnitt,
- Fig. 2d: zeigt einen Hohlkörper nach Fig. 2b nach dem Aufweiten im Querschnitt,
- Fig. 3a: zeigt einen erfindungsgemäßen Verbundhohlkörper als Kurbelwelle im Längsschnitt,
- Fig. 3b: zeigt einen Hohlkörper nach Fig. 3a in einem ersten Querschnitt in einer ersten Ausführung,
- Fig. 3c: zeigt einen Hohlkörper nach Fig. 3a in einem zweiten Querschnitt in einer ersten Ausführung.
- Fig. 3d: zeigt einen Hohlkörper nach Fig. 3a in einem ersten Querschnitt in einer zweiten Ausführung,
- Fig. 3e: zeigt einen Hohlkörper nach Fig. 3a in einem zweiten Querschnitt in einer zweiten Ausführung.

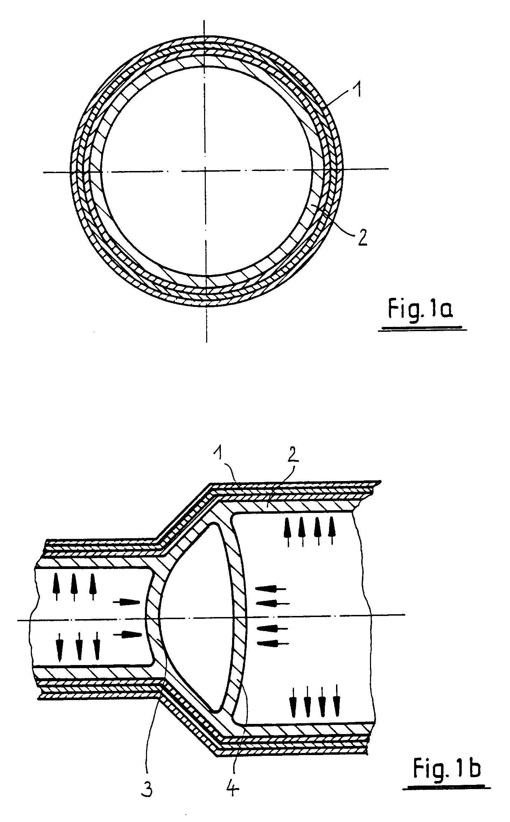

In Figur 1a ist ein runder Hohlkörper mit einer äußeren Hülse 1 gezeigt, die aus mehreren nicht näher bezeichneten Lagen besteht, an die sich innen unmittelbar eine innere Hülse 2 anlegt.

In Figur 1b sind die aus mehreren Schichten aufgebaute äußere Hülse 1, die darin eingesetzt innere Hülse 2 und zwei mit dieser einstückig verbundene Zwischenböden 3, 4 im Bereich von Querschnittssprüngen erkennbar. Die Zwischenböden 3, 4 sind so gewölbt, daß sie bei der durch Pfeile angedeuteten inneren Druckbeaufschlagung der inneren Hülse 2, zur Erzielung einer erhöhten Vorspannung in der Außenhülse 1, unter plastischer Umformung flachgedrückt werden.

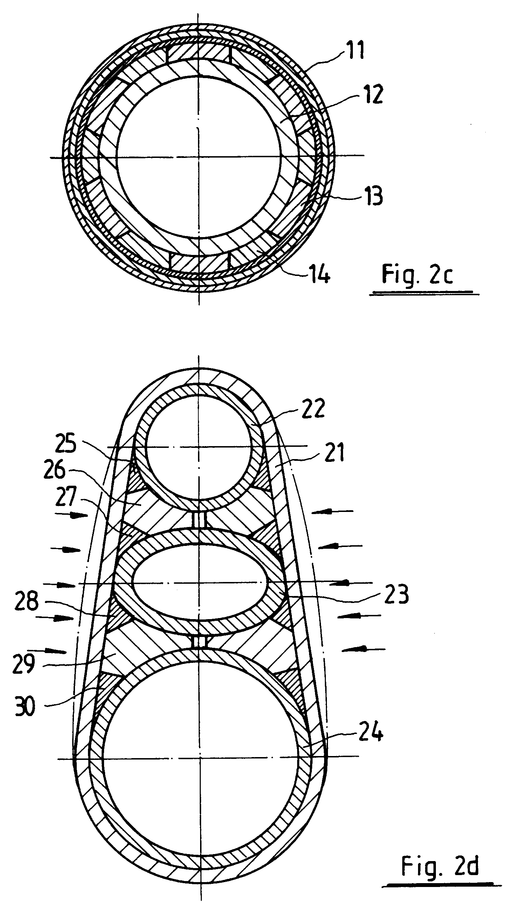

In den Figuren 2a und 2c ist ein runder Hohlkörper wiedergegeben, der die aus mehreren einzelnen Lagen bestehende Außenschicht 11 zeigt, wobei die einzelnen Lagen nicht näher bezeichnet sind. Mit Abstand hierzu ist eine innere Hülse 12 wiedergegeben, wobei zwischen den beiden Schichten mit in radialer Richtung keilförmigen Flächen versehene Stützkörper 13, 14 angeordnet sind. Diese können sich beim plastischen oder thermischen Umformen der Hülse 12 gegeneinander verschieben, während sie sich beim Rückfedern des rein elastisch aufgeweiteten Hülsenkörpers 11 gegeneinander verkeilen und damit an der Druckvorspannung teilhaben. In Fig. 2a ist die Situation vor dem Umformen der inneren Hülse 12 dargestellt, wobei die Stützkörper 13,14 an den Kontaktflächen gegeneinander versetzt sind. In Fig. 2c ist die Situation nach dem Umformen der inneren Hülse 12 und einem radialen Verschieben der inneren Stützkörper 13 zwischen die äußeren Stützkörper 14 gezeigt, die in dieser Position die elastisch vorgespannte Außenschicht 14 auf einem vergrößerten Stützumfang in gegeneinander verteilter Stellung festhalten. Die Innenhülse 12 kann thermisch unterkühlt eingesetzt werden oder nach dem spannungsfreien Einsetzen plastisch aufgeweitet werden.

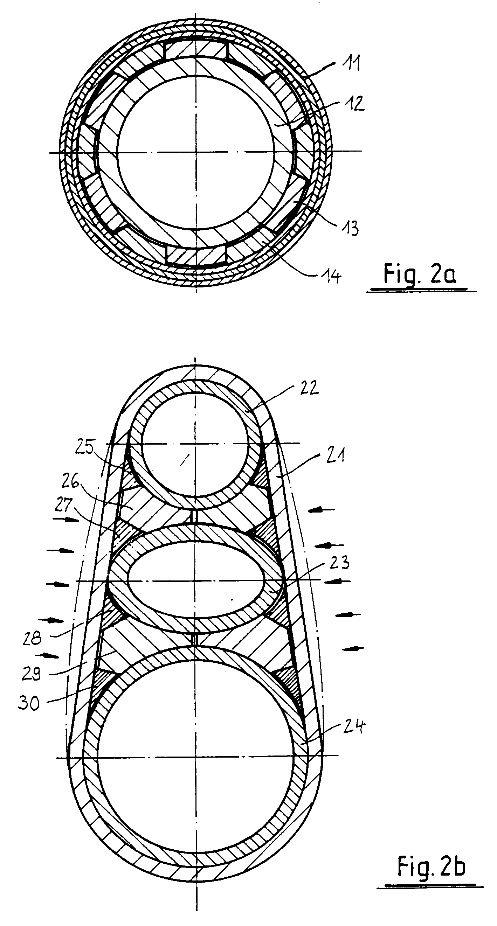

In den Figuren 2b und 2d ist ein Hohlkörper mit einer aus zwei Kreis- bögen und zwei tangentialen Verbindungen bestehenden äußeren Schicht 21 und mehreren darin eingesetzten runden, beziehungsweise ovalen Hülsen 22, 23, 24 gezeigt, die zur Erzeugung einer elastischen Druckvorspannung in der äußeren Schicht 21 einer inneren Aufweitung und plastischen Verformung unterworfen worden sind. Jeweils zwischen zwei der Hülsen sind Stützkörper 25, 26, 27; 28, 29, 30 hoher Drucksteifigkeit (Keramik) eingesetzt, die der Druckübertragung von den nicht unmittelbar anliegenden Bereichen der Hülsenkörper auf die äußere Schicht 21 dienen und die sich beim plastischen oder thermischen Umformen der Hülsen 22, 23, 24 gegeneinander verschieben, während sie sich beim Rückfedern der rein elastisch aufgeweiteten äußeren Schicht 21 gegeneinander verkeilen und damit an der Druckvorspannung teilhaben. In Fig. 2b ist die Situation vor dem Umformen der inneren Hülsen 22,23,24 dargestellt, wobei die Stützkörper an ihren Kontaktflächen gegeneinander abwechselnd nach innen und außen versetzt sind. In Fig. 2d ist die Situation nach dem Umformen der inneren Hüseln 22,23,24 dargestellt, wobei die zunächst nach innen versetzten Stützkörper 26,29 radial nach außen zwischen die übrigen Stützkörper 25,27,28,30 verschoben sind, und die Stützkörper insgesamt die elastisch vorgespannte Außenschicht 21 auf einem vergrößerten Außenumfang in gegeneinander verteilter Stellung festhalten. Die Innenhülsen können thermisch unterkühlt eingesetzt werden oder nach dem spannungsfreien Einsetzen mechanisch oder hydraulisch bis zur plastischen Verformung aufgeweitet werden.

Durch radiale Pfeile ist jeweils angedeutet, daß durch Gegenhalten ein Aufweiten nach Art der strichpunktierten dünnen Linie verhindert werden kann und die Außenschicht die gezeichnete Form, die sie von Beginn aufweist, auch später beibehält.

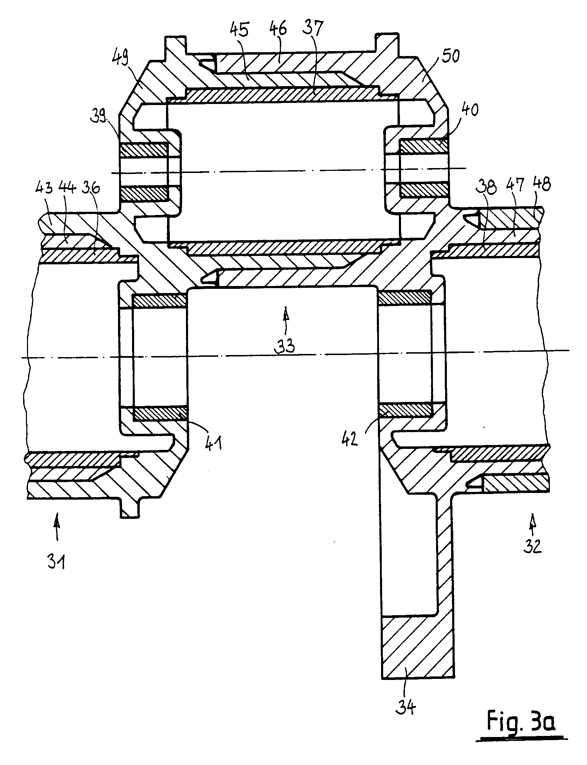

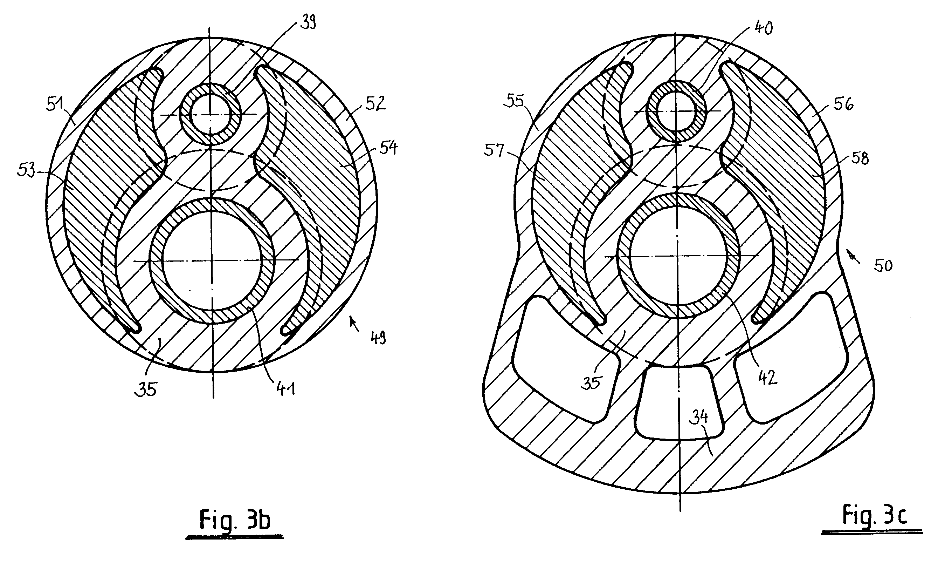

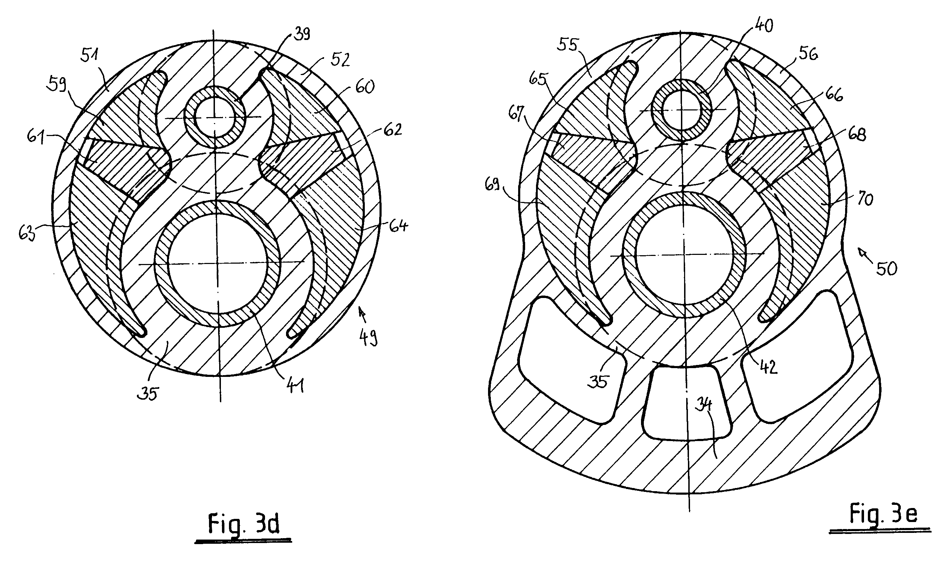

In Figur 3a ist ein Abschnitt einer Kurbelwelle dargestellt, der zwei Grundzapfen 31, 32 und einen Hubzapfen 33 aufweist. An einer Kurbelwange ist ein Gegengewicht 34 angeordnet. Die Kurbelwelle besteht aus einer äußeren Hülse 35 und darin eingesetzten inneren plastisch umgeformten Hülsen 36, 37, 38 im Bereich der Zapfen und 39, 40, 41, 42 im Bereich der Kurbelwangen. Die äußere Hülse 35 ist dabei jeweils aus ineinandergesteckten Zapfenteilen 43, 44; 45, 46; 47, 48 zusammengesetzt, die wechselseitig an den Kurbelwangen 49, 50 ansetzen.

In Figur 3b ist die Kurbelwange 49 im schematisierten Querschnitt gezeigt, wobei der im Bereich der Wange etwa 8-förmige Außenkörper 35 erkennbar ist, der über Stege 51, 52 zu einer Ringform ergänzt ist. Zur Erzeugung der Zugvorspannung in dem 8-förmigen Außenkörper 35 sind die plastisch aufgeweiteten Hülsen 39 und 41 eingesetzt, sowie zur Erzeugung und Haltung der Vorspannung in den Stegen 51, 52 etwa mondsichelförmige Formkörper 53, 54.

In Figur 3c ist die Kurbelwange 50 im Querschnitt erkennbar, bei der an der etwa 8-förmigen Außenschicht 35 das Gegengewicht 34 angesetzt ist und die durch Stege 55, 56 teilweise zur Ringform ergänzt ist. Auch hier sind die plastisch aufgeweiteten Hülsen 40 und 42 im Schnitt dargestellt, sowie mondsichelförmige Formkörper 57, 58 zur Erzeugung einer gleichmäßigen Vorspannung in den Stegen 55, 56.

Die Formkörper sind in diesem Beispiel durch axiales Einpressen mit einer konischen Form und mit einem Selbsthemmung bewirkenden Winkel der konischen Flächen zur Erzeugung der Vorspannung in den Stegen 51, 52, 55, 56 eingesetzt.

In Fig. 3d ist die Kurbelwange 49 in ähnlicher Darstellung wie in Fig. 3b gezeigt. Es sind jedoch mehrteilige Klemmkörper 59, 60, 61; 62, 63, 64 gezeigt, die im Querschnitt keilförmige Form haben und zu einer Vorspannung in den Stegen 53, 54 beim Einsetzen führen.

In Fig. 3e ist die Kurbelwange 50 in ähnlicher Darstellung wie in Fig. 3c gezeigt. Auch hier sind entsprechend Fig. 3d mehrteilige Klemmkörper 65, 66, 67; 68, 69, 70 vorgesehen, die sich gegeneinander verschiebende Keilflächen haben, die Winkel im Bereich der Selbsthemmung haben.

Die Klemmkörper sind in axialer Richtung konisch bzw. keilförmig und haben auch im Querschnitt Keilform, wobei jeweils die Winkel im Bereich der Selbsthemmung liegen. Beim axialen Einpressen und ggfs. beim radialen Aufweiten der Hülsen 39, 40, 41, 42, verschieben sich die Klemmkörper gegeneinander und sind gegen ein Rückfedern durch die Selbsthemmung an ihren Gleitflächen gesichert, so daß sie eine Vorspannung in den Stegen 51, 52, 55, 56 erzeugen und aufrechterhalten.

## Patentansprüche

1. Verbundhohlkörper mit einer Längsachse zur Aufnahme von Drehmomenten und/oder Zug-, Druck- oder Biegekräften, wobei in einer äußeren Materialschicht (1) durch in senkrechter Richtung zur Längsachse druckaufnehmende innere Stützmittel (2) im wesentlichen über die gesamte axiale Länge eine jeweils über dem Umfang gleichmäßige Zugvorspannung in Umfangsrichtung herrscht,
dadurch gekennzeichnet,
daß in der äußeren Materialschicht (1) durch in axialer Richtung zugaufnehmende innere Stützmittel (2) eine gleichmäßige oder zur Mitte größere axial gerichtete Druckvorspannung vorherrscht.

2. Verbundhohlkörper nach Anspruch 1,
dadurch gekennzeichnet,
daß die innere Schicht (2, 12) oder Hülse (22, 23, 24; 39, 40, 41, 42) aus plastisch in situ aufgeweitetem Material geringerer Streckgrenze als die äußere Schicht (1, 11, 21, 35) besteht.

3. Verbundhohlkörper nach einem der Ansprüche 1 oder 2,
dadurch gekennzeichnet,
daß in die Stützmittel aus dem Material geringerer Streckgrenze eingesetzte oder eingeformte Zwischenböden zur zusätzlichen Abstützung vorgesehen sind.

4. Verbundhohlkörper nach einem der Ansprüche 1 oder 2,
gekennzeichnet durch die Ansgestaltung als Kurbelwelle, Getriebewelle oder Nockenwelle.

5. Verfahren zur Herstellung von rohrförmigen Verbundhohlkörpern nach Anspruch 1,
dadurch gekennzeichnet,
daß zunächst durch plastisches Aufweiten eines als inneres Stützmittel dienenden rohrförmigen Stützkörpers an den Enden eine Verbindung zwischen äußerer Materialschicht und Stützkörper hergestellt wird und daß dann durch plastisches Aufweiten des rohrförmigen Stutzkörpers im. Mittelbereich unter gleichzeitiger axialer Verkürzung desselben eine Zugvorspannung in Umfangsrichtung und eine Druckvorspannung in Längsrichtung in der äußeren Materialschicht hervorgerufen wird.

6. Verfahren nach Anspruch 5,
dadurch gekennzeichnet,
daß der Stützkörper durch hydraulischen Innendruck aufgeweitet wird.

7. Verfahren nach Anspruch 5,
dadurch gekennzeichnet,
daß der Stützkörper von innen durch mechanische Mittel aufgeweitet wird.

8. Verfahren nach Anspruch 5,
dadurch gekennzeichnet,
daß der Stützkörper unterkühlt eingebracht und/oder die äußere Materialschicht vor dem Ineinanderfügen erwärmt und dann der Temperaturausgleich herbeigeführt wird.

9. Verfahren nach Anspruch 5,
dadurch gekennzeichnet,
daß der Stützkörper und die äußere Materialschicht axial ineinandergepreßt wird.

## Claims

1. Hollow sandwich element comprising a longitudinal axis for receiving torques and/or tractive, compressive or bending forces, in which respect a tractive pretension is active essentially over the entire axial length in an exterior material layer (1) due to interior support means (2) which absorb pressure vertically to the longitudinal axis, **characterized in that** an axially oriented compressive pretension, which is even or greater towards the centre, is predominant in the exterior material layer (1) due to internal support means (2) which absorb tractive loads in the axial direction.

2. Hollow sandwich element according to claim 1, **characterized in that** the inner layer (2, 12) or sleeve (22, 23, 24; 39, 40, 41, 42) is composed of a material of lesser tensile yield than the outer layer (1, 11, 21, 35) which has been plastically widened in situ.

3. Hollow sandwich element according to one of claims 1 or 2, **characterized in that** an additional support is provided by intermediate webs, which are of a material of lower tensile yield and inserted or integrated into the support means.

4. Hollow sandwich element according to one of claims 1 or 2, **characterized by** being structured as a crankshaft, gearing shaft or camshaft.

5. Process for the manufacture of tubular hollow sandwich elements according to claim 1, **characterized in that** initially a connection between exterior material layer and support element is established by plastic widening of the ends of a tubular support element which serves as an internal support, and thereafter a tractive pretension in the peripheral direction and a compressive pretension in the longitudinal direction is generated in the external material layer by plastic widening of the tubular support element in the central area whilst at the same time axially shortening it.

6. Process according to claim 5, **characterized in that** the support element is widened by hydraulic inside pressure.

7. Process according to claim 5, **characterized in that** the support element is widened from the inside by mechanical means.

8. Process according to claim 5, **characterized in that** the support element is inserted whilst undercooled and/or the outer material layer is heated prior to assembly, and the temperature is then equalized.

9. Process according to claim 5, **characterized in that** the support element and the external material layer are axially pressed together.

## Revendications

1. Corps creux composite avec un axe longitudinal pour recevoir des couples de rotation et/ou des forces de traction, de compression ou de flexion, une précontrainte de traction répartie respectivement uniformément sur la périphérie existant en direction périphérique essentiellement sur la totalité de la longueur axiale régnant dans une couche externe de matière (1) par des moyens de support interne (2) absorbant la pression en direction orthogonale à l'axe longitudinal,
caractérisé en ce qu'une précontrainte de compression dirigée axialement, uniforme ou plus grande vers le milieu, pré-règne dans la couche externe de matière (1) par des moyens d'appui intérieurs (2) absorbant une traction en direction axiale.

2. Corps creux composite selon la revendication 1,
caractérisé en ce que la couche interne (2,12) ou la douille (22,23,24 ; 39,40,41,42) est constitué en matériau élargi plastiquement in situ de limite élastique plus faible que la couche externe (1,11,21,35).

3. Corps creux composite selon l'une des revendications 1 ou 2,
caractérisé en ce que des fonds intermédiaires rapportés ou formés dans le matériau à limite élastique plus faible sont prévus dans les moyens d'appui pour un support additionnel.

4. Corps creux compositie selon l'une des revendications 1 ou 2,
caractérisé par le façonnage sous forme de vilebrequin, d'arbre de transmission ou d'arbre à cames.

5. Procédé de fabrication de corps creux composites tubulaires selon la revendication 1,
caractérisé en ce que, par élargissement plastique, aux extrémités, d'un corps de support tubulaire servant de milieu de support interne, est d'abord fabriquée une liaison entre une couche externe de matière et un corps de support et qu'ensuite, par élargissement plastique du corps de support tubulaire dans la zone médiane avec raccourcissement axial simultané de celui-ci, une précontrainte de traction en direction périphérique et une précontrainte de compression en direction longitudinale dans la couche externe de matière sont engendrées.

6. Procédé selon la revendication 5,
caractérisé en ce que le corps de support est élargi par pression interne hydraulique.

7. Procédé selon la revendication 5,
caractérisé en ce que le corps de support est élargi de l'intérieur par des moyens mécaniques.

8. Procédé selon la revendication 5,
caractérisé en ce que le corps de support est mis en place à l'état surrefroidi et/ou la couche externe de matière est réchauffée avant l'adaptation l'un dans l'autre et ensuite l'équilibrage de température est causé.

9. Procédé selon la revendication 5,
caractérisé en ce que le corps de support et la couche externe de matière sont comprimés axialement l'un dans l'autre.
